# EUROPÄISCHE PATENTSCHRIFT

(11) **EP 0 447 935 B1**
(45) Veröffentlichungstag und Bekanntmachung des Hinweises auf die Patenterteilung: **19.08.1998**
(21) Anmeldenummer: 91103815.6
(22) Anmeldetag: 13.03.1991
(51) Int. Cl.: H04Q 3/42, H04Q 1/444

(54) **Schaltungsanordnung zum Senden und Empfangen von Tonfrequenzsignalen an Verbindungsleitungen von Kommunikations-Vermittlungsanlagen**
Circuit arrangement for sending and receiving tone frequency signals on telephone lines
Agencement de circuit pour l'émission et la réception de signaux à fréquence vocale sur lignes téléphoniques

(30) Priorität: 16.03.1990 DE 4008449
(43) Veröffentlichungstag der Anmeldung: 25.09.1991
(73) Patentinhaber: ROBERT BOSCH GMBH, 70442 Stuttgart (DE)
(72) Erfinder: Meisner, Armin, Dipl.-Ing., W-6370 Oberursel (DE); Petri, Udo, Dipl.-Ing., W-6204 Taunusstein 4 (DE)

(56) Entgegenhaltungen:
- WO-A-85/02083
- GB-A- 2 200 816
- ICASSP PROCEEDINGS Bd. 2/4 , 7. April 1986 , TOKYO, JAPAN Seiten 1341 - 1344 T.D.HOPMANN ET AL. 'A System design for real time signal processing'
- PATENT ABSTRACTS OF JAPAN vol. 012, no. 250 (E-633)14. Juli 1988 & JP-A-63 038 388 (NEC CORP.) 18. Februar 1988

## Beschreibung

Die Erfindung betrifft eine Schaltungsanordnung zum Senden und Empfangen von Tonfrequenzsignalen an Verbindungsleitungen von Kommunikations-Vermittlungsanlagen nach dem Oberbegriff des Patentanspruchs 1.

Aus der GB 2 200 816 A ist ein digitales Signalverarbeitungssystem bekannt, das mehrere digitale Signalprozessoren aufweist. Diese können mit Anwendungsprogrammen aus einer Zentraleinheit geladen werden. Dies erlaubt die Durchführung verschiedener Dienstmerkmale wie Tongenerierung und -detektion.

Eine Schaltungsanordnung zum Durchschalten von Tonund Niederfrequenzsignalen im Sprechweg von Verbindungsleitungsübertragungen in Fernsprechvermittlungsanlagen ist aus der DE-PS 30 17 740 bekannt. Dort wird ein matrixförmig aufgebauter Koppelbaustein benutzt, um je nach Verbindungszustand Tongeneratoren oder Mehrfrequenz-Wahl-Sender an den Sprechweg der Verbindungsleitungs-Übertragung anzuschalten. Es ist außerdem vorgesehen, Tonfrequenzempfänger an den Sprechweg anzuschalten. Dies geschieht durch eine in der Verbindungsleitungs-Übertragung befindliche Steuereinrichtung, welche die Befehle an den Koppelbaustein gibt, damit dort die betreffenden Koppelpunkte so lange durchgeschaltet werden, wie dies für die jeweilige Funktion erforderlich ist. Hierbei wird jedoch für jede einzelne Verbindungsleitungs-Übertragung eine eigene Steuereinrichtung benötigt. Die zu sendenden Tonfrequenzen für Töne oder für Wahlinformation werden zentral erzeugt, so daß es nicht möglich ist, individuelle Anpassungen pro Verbindungsleitung vorzunehmen. Wenn dies verlangt wird, so müßten auch die Tongeneratoren und die Mehrfrequenz-Wahl-Sender pro Verbindungsleitungs-Übertragung vorgesehen werden. Das gleiche trifft zu für einen oder mehrere TonfrequenzEmpfänger.

Die Aufgabe der Erfindung besteht darin, eine Schaltungsanordnung anzugeben, womit es möglich ist, mit einer Steuereinrichtung mehrere Verbindungsleitungen zu bedienen, wobei individuell pro Verbindungsleitung verschiedenartige Tonfrequenzen gesendet und empfangen werden können. Außerdem sollen die Voraussetzungen geschaffen werden, daß eine individuelle Anpassung der Sende- und Empfangspegel ohne Änderung der Hardwaremöglich ist.

Zur Lösung dieser Aufgabe ist eine Merkmalskombination vorgesehen, wie sie im Patentanspruch 1 angegeben ist.

Damit wird in vorteilhafter Weise erreicht, daß durch individuelle Programmierung festgelegt werden kann, welche Tonfrequenzen auf der jeweils ausgewählten Verbindungsleitung gesendet werden und welche Tonfrequenzen dort empfangen werden. Durch den Einsatz eines digitalen Signalprozessors ist es möglich, eine große Variationsbreite von verschiedenen Tonfrequenzen und Kombinationen zu erreichen, ohne daß die Kosten wesentlich steigen. Mit einer peripheren Steuereinrichtung können mehrere Verbindungsleitungen bedient werden.

In den Unteransprüchen sind vorteilhafte Weiterbildungen der Erfindung angegeben.

Ein Ausführungsbeispiel der Erfindung wird nachfolgend anhand von Zeichnungen näher erläutert.

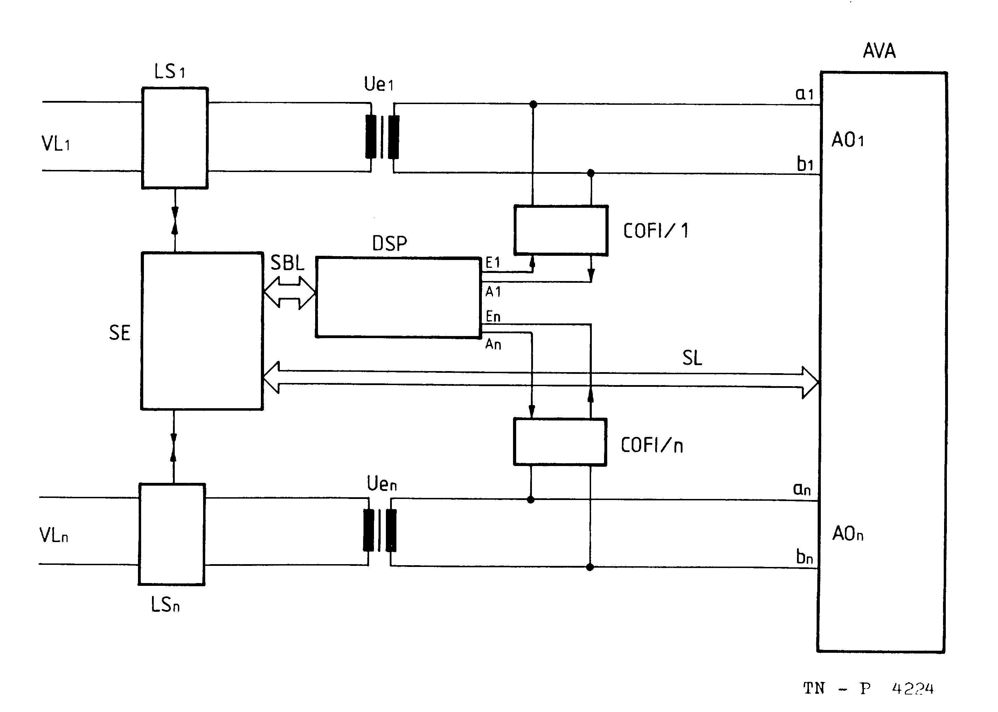

In der Zeichnung ist dargestellt, wie jede einzelne Verbindungsleitung VL1 - VLn durch eine Leitungsschnittstelle LS1 - LSn abgeschlossen ist. Über diese Leitungsschnittstellen LS1 - LSn werden alle vermittlungstechnischen Kennzeichen über die Verbindungsleitungen VL1 - VLn gesendet und empfangen, welche nicht innerhalb des Sprachfrequenzbandes liegen. Wenn derartige vermittlungstechnische Kennzeichen gesendet werden sollen, so gibt die analoge Vermittlungsanlage AVA über ein Steuerleitungsbündel SL entsprechende Befehle an die dezentrale Steuereinrichtung SE. Dort werden diese Befehle logisch verarbeitet und als Steuerkriterien zu den betreffenden Leitungsschnittstellen LS1 - LSn geleitet, wo die entsprechenden Schaltaufträge ausgeführt werden. Solche Schaltaufträge können beispielsweise darin bestehen, daß Gleichstromschleifen geschlossen oder geöffnet werden, daß Gleichspannungen angeschaltet oder abgeschaltet werden, oder daß niederfrequente Wechselströme ausgesendet werden.

Beim Empfangen von über die Verbindungsleitung VL1 - VLn eintreffenden Schaltkennzeichen werden diese von den Leitungsschnittstellen LS1 - LSn erkannt und an die dezentrale Steuereinrichtung SE weitergegeben. Von dort aus gelangen sie zusammen mit einer entsprechenden Leitungsadresse über das Steuerleitungsbündel SL zur zentralen Steuerung der analogen Vermittlungsanlage AVA.

Die dezentrale Steuereinrichtung SE erkennt anhand der von den Leitungsschnittstellen LS1 - LSn empfangenen Kriterien und anhand der von der analogen Vermittlungsanlage AVA abgegebenen Befehle jederzeit, welcher Verbindungszustand auf den einzelnen Verbindungsleitungen VL1 - VLn herrscht. Daraufhin werden über Steuerbefehlsleitungen SBL Befehle an den digitalen Signalprozessor DSP gegeben, womit dieser veranlaßt wird, sich auf Senden oder Empfangen für die betreffende Verbindungsleitung VL1 - VLn einzustellen. Für jede Verbindungsleitung VL1 - VLn ist je ein Eingang E1 - En und ein Ausgang A1 - An des digitalen Signalprozessors DSP zuständig. Daran ist je eine Wandlerschaltung COFI1 - COFIn angeschlossen. Der Analogteil dieser Wandlerschaltungen COFI1 - COFIn ist mit den Sprechadern verbunden. Die Sprechadern sind jeweils mit Übertragern UE1 - UEn an die Verbindungsleitungen VL1 - VLn angekoppelt. Die andere Seite der Sprechadern al/bl - an/bn sind zur analogen Vermittlungsanlage AVA geführt, wo sie über Anschlußorgane AO1 - AOn zu den entsprechenden Koppelpunkten gelangen.

Wenn auf einer der Verbindungsleitungen, z. B. VL 1 ein Verbindungszustand herrscht, bei dem über die Verbindungsleitung VL1 einlaufende Tonfrequenzen zu empfangen sind, so ist von der Steuereinrichtung SE über die Steuerbefehlsleitung SBL ein entsprechender Befehl an den digitalen Signalprozessor DSP gegeben worden. Die Tonfrequenzen, welche auf der Verbindungsleitung VL1 empfangen werden, werden in der Wandlerschaltung COFI1 digitalisiert und gelangen an den zugehörigen Eingang El des digitalen Signalprozessors DSP. Durch den von der Steuereinrichtung SE an den digitalen Signalprozessor DSP abgegebenen Befehl wird dieser nicht nur auf Empfang eingestellt für die betreffende Verbindungsleitung VL1, sondern es werden auch digitale Filter innerhalb des digitalen Signalprozessors DSP gebildet, womit die Frequenz des zu empfangenden Tonfrequenzsignals festgelegt ist. Wenn ein Tonfrequenzsignal mit erwarteter Frequenz und Pegel empfangen wird, so meldet sich der digitale Signalprozessor DSP über die Steuerbefehlsleitungen SBL dies an die periphere Steuereinrichtung SE. Von dort aus gelangt dann dieses Kriterium über die Steuerleitungen SL zur analogen Vermittlungsanlage AVA, wobei dieser Meldung die Adresse der betreffenden Verbindungsleitung VL 1 beigegeben ist.

Wenn aufgrund des Verbindungszustandes einer Verbindungsleitung, z. B. VLn, wobei auch die Verkehrsrichtung beachtet wird, festgestellt wird, daß Tonfrequenzsignale zu senden sind, so geschieht dies ebenfalls dadurch, daß die Steuereinrichtung SE entsprechende Befehle an den digitalen Signalprozessor DSP abgibt. Der zu sendenden Frequenz entsprechend werden innerhalb des digitalen Signalprozessors DSP aufgrund der anliegenden Befehlsstruktur digitale Generatoren gebildet, wodurch das digitalisierte Tonfrequenzsignal am zugehörigen Ausgang An abgegeben wird. Von dort gelangt es zu der zugeordneten Wandlerschaltung COFIn, wo es in eine analoge Form umgewandelt wird und auf den Sprechweg gelangt. Auf diese Weise können den Eigenschaften der jeweiligen Verbindungsleitung VLn entsprechend sowohl einfache Tonfrequenzsignale in verschiedenen Rhythmen als auch Wahl information nach dem Mehrfrequenzverfahren ausgesendet werden.

Innerhalb des digitalen Signalprozessors DSP ist für jede Verbindungsleitung VL1 - VLn im einzelnen festgelegt, welche Frequenzen und welche Schaltzeiten für die einzelnen Töne erforderlich sind. Dies gilt sowohl für das Senden als auch für das Empfangen der auf dem Sprechweg auszutauschenden Tonfrequenzsignale. Die dazu notwendigen Steuerkriterein werden zunächst zwischen der analogen Vermittlungsanlage AVA und der dezentralen Steuereinrichtung SE ausgetauscht, und von dort in entsprechend umgesetzter Form als Steuerbefehle über die Steuerbefehlsleitung SBL zwischen dem digitalen Signalprozessor und der dezentralen Steuereinrichtung SE ausgetauscht.

Mit dem digitalen Signalprozessor DSP ist es außerdem möglich, während einer Gesprächsverbindung, die sich im Haltezustand befindet, besondere Informationen auszusenden. Dabei kann es sich um ausgewählte Musikstücke handeln, die einen wartenden Teilnehmer veranlassen, die Verbindung aufrechtzuerhalten. Dieses unter dem Begriff Music on Hold international bekannte Merkmal ist innerhalb des digitalen Signalprozessors DSP für jede einzelne Verbindungsleitung VL1 - VLn individuell einrichtbar. Es kann also ein begrenzter Vorrat von Melodien bereitgehalten werden, welche wahlweise den jeweiligen Verbindungsleitungen VL1 - VLn zugeordnet werden können. Es kann also für dieses Merkmal bestimmt werden, welche Melodie oder auch Ansage auf einer Verbindungsleitung VL1 - VLn gesendet werden soll.

## Patentansprüche

1. Schaltungsanordnung zum Senden und Empfangen von
Tonfrequenzsignalen an analog betriebene Verbindungsleitungen von Kommunikationsvermittlungsanlagen,
wobei das Anschalten von Tonsendern und Tonempfängern von einer dezentralen Steuereinrichtung (SE) bewirkt wird und an diese ein digitaler Signalprozessor (DSP) angeschlossen ist, der mehrere digitale Eingänge (El bis En) und mindestens einen digitalen Ausgang (Al bis An) aufweist, und
wobei der digitale Signalprozessor (DSP) von der Steuereinrichtung (SE) Einstellbefehle erhält, worin Parameter enthalten sind, welche die jeweils zu sendenden oder zu empfangenden Signale oder Signalfolgen charakterisieren, und wobei die Bestimmung der zu sendenden oder zu empfangenden Signale oder Signalfolgen jeweils in Abhängigkeit des von der Steuereinrichtung festgestellten Verbindungszustandes der betreffenden Verbindungsleitung (VL) erfolgt, zu deren Auswahl dem digitalen Signalprozessor (DSP) mit den Einstellbefehlen eine entsprechende Information mitgeteilt wird, so daß mit den Einstellbefehlen eine bestimmte Verbindungsleitung (VL) selektiert werden kann, wenn die Steuereinrichtung (SE) und der digitale Signalprozessor (DSP) für mehrere Verbindungsleitungen zuständig ist,
dadurch gekennzeichnet,
daß jeweils ein digitaler Eingang (z. B. En) des digitalen Signalprozessors (DSP) mit einem digitalen Ausgang einer Wandlerschaltung (COFI/n) verbunden ist,
daß der zugehörige digitale Ausgang (An) des Signalprozessors (DSP) mit dem digitalen Eingang derselben Wandlerschaltung (COFI/n) verbunden ist und
daß aufgrund der Einstellbefehle digitale Generatoren zum Senden und digitale Filter zum Empfangen innerhalb des digitalen Signalprozessors (DSP) gebildet werden.

2. Schaltungsanordnung nach Anspruch 1,
dadurch gekennzeichnet,
daß beim Senden von Tonsignalen sowohl einfache Hörtöne oder Hörtonfolgen als auch Musikstücke und/oder Ansagen möglich sind, deren Strukturen innerhalb des digitalen Signalprozessors (DSP) parametrisch abgespeichert sind.

3. Schaltungsanordnung nach Anspruch 1,
dadurch gekennzeichnet,
daß zu sendende Tonsignale in Abhängigkeit von der jeweils zu bedienenden Verbindungsleitung (VL) mit Hilfe der Einstellbefehle für den digitalen Signalprozessor (DSP) gezielt auswählbar sind.

4. Schaltungsanordnung nach Anspruch 1,
dadurch gekennzeichnet,
daß mit dem digitalen Signalprozessor (DSP) tonfrequente Wahl information gesendet und empfangen wird.

5. Schaltungsanordnung nach Anspruch 1,
dadurch gekennzeichnet,
daß die Sende- und Empfangspegel der Tonfrequenzsignale mit den Einstellbefehlen für den digitalen Signalprozessor (DSP) vorgegeben werden.

## Claims

1. Circuit arrangement for sending and receiving voice-frequency signals on analogue-operated trunks of communications exchanges, the tone generators and tone receivers being switched on by a decentralized control device (SE), and there being connected to it a digital signal processor (DSP) which has a plurality of digital inputs (E1 to En) and at least one digital output (A1 to An), and the digital signal processor (DSP) receiving from the control device (SE) setting instructions in which parameters are contained which characterize the signals or signal sequences respectively to be sent or to be received, and the determination of the signals or signal sequences to be sent or to be received is performed in each case as a function of the connection status of the relevant trunk (VL) established by the control device, for the purpose of selecting which trunk the digital signal processor (DSP) also receives appropriate information with the setting instructions, with the result that a specific trunk (VL) can be selected using the setting instructions if the control device (SE) and the digital signal processor (DSP) are responsible for a plurality of trunks, characterized in that in each case a digital input (for example En) of the digital signal processor (DSP) is connected to a digital output of a converter circuit (COFI/n), in that the associated digital output (An) of the signal processor (DSP) is connected to the digital input of the same converter circuit (COFI/n), and in that digital generators for sending and digital filters for receiving are formed inside the digital signal processor (DSP) on the basis of the setting instructions.

2. Circuit arrangement according to Claim 1, characterized in that when sending voice-frequency signals both simple audible tones or audible tone sequences and pieces of music and/or announcements are possible, the structures of which are stored parametrically inside the digital signal processor (DSP).

3. Circuit arrangement according to Claim 1, characterized in that voice-frequency signals to be sent can be selected specifically as a function of the trunk (VL) respectively to be operated, with the aid of the setting instructions for the digital signal processor (DSP).

4. Circuit arrangement according to Claim 1, characterized in that voice-frequency selection information is sent and received by means of the digital signal processor (DSP).

5. Circuit arrangement according to Claim 1, characterized in that the send and receive levels of the voice-frequency signals are prescribed by means of the setting instructions for the digital signal processor (DSP).

## Revendications

1. Circuit d'émission et de réception de signaux de fréquence sonores dans des lignes à fonctionnement analogique d'installations de communication téléphoniques, selon lequel
• le branchement d'émetteur sonore et de récepteur sonore est assuré par une installation de commande décentralisée (SE), et un processeur numérique de signal (DSP) est relié à celle-ci, ce processeur comportant plusieurs entrées numériques (E1-En) et au moins une sortie numérique (A1-An),
• le processeur numérique de signal (DSP) reçoit, de l'installation de commande (SE), des ordres de réglage contenant des paramètres qui caractérisent les signaux respectifs à émettre ou à recevoir, ou des suites de signaux,
• la détermination des signaux à émettre ou à recevoir, ou des suites de signaux, se fait chaque fois en fonction de l'état de liaison de la ligne de liaison correspondante (VL), constaté par l'installation de commande et, pour la sélection, le processeur numérique de signal (DSP) reçoit une information correspondant aux ordres de réglage, de sorte que les ordres de réglage sélectionnent une ligne de liaison déterminée (VL) si l'installation de commande (SE) et le processeur numérique de signal (DSP) sont responsables de plusieurs lignes de liaison,
caractérisé en ce que
• chaque fois une entrée numérique (par exemple En) du processeur numérique de signal (DSP) est reliée à une sortie numérique d'un convertisseur (COFI/n),
• la sortie numérique respective (An) du processeur de signal (DSP) est reliée à l'entrée numérique du même convertisseur (COFI/n), et
• sur la base des ordres de réglage, on forme des générateurs numériques pour l'émission et des filtres numériques pour la réception dans le processeur numérique de signal (DSP).

2. Circuit selon la revendication 1,
caractérisé en ce qu'
à l'émission de signaux sonores, il est possible d'avoir de simples sons audibles ou des suites de sons audibles ou encore des morceaux de musique et/ou des informations, dont les structures sont mises en mémoire de manière paramétrique dans le processeur numérique de signal (DSP).

3. Circuit selon la revendication 1,
caractérisé en ce que
les signaux sonores à émettre sont sélectionnés de manière dirigée en fonction de la ligne de liaison (VL) à desservir respectivement, à l'aide d'ordres de réglage pour le processeur numérique de signal (DSP).

4. Circuit selon la revendication 1,
caractérisé en ce que
le processeur numérique de signal (DSP) émet et reçoit des informations de sélection à la fréquence sonore.

5. Circuit selon la revendication 1,
caractérisé en ce que
le niveau d'émission et de réception des signaux de fréquence sonores est prédéterminé par les ordres de réglage du processeur numérique de signal (VSP).
